# EUROPÄISCHE PATENTSCHRIFT

(11) **EP 3 230 631 B1**
(45) Veröffentlichungstag und Bekanntmachung des Hinweises auf die Patenterteilung: **14.08.2019**
(21) Anmeldenummer: 15794506.4
(22) Anmeldetag: 03.11.2015
(51) Int. Cl.: F16K 17/00, F16K 31/00

(54) **DURCHFLUSSSPERRVENTIL**
FLOW STOP VALVE
SOUPAPE D'ARRÊT D'ÉCOULEMENT

(30) Priorität: 11.12.2014 DE 102014225560
(43) Veröffentlichungstag der Anmeldung: 18.10.2017
(73) Patentinhaber: EagleBurgmann Germany GmbH & Co. KG, 82515 Wolfratshausen (DE)
(72) Erfinder: STEIGENBERGER, Hans, 82547 Eurasburg (DE); KARNER, Hubert, A-9463 Reichenfels / Kärnten (AT); SVEJKOVSKY, Reinhard, 82438 Eschenlohe (DE)
(74) Vertreter: Hoefer & Partner Patentanwälte mbB
(86) Internationale Anmeldenummer: PCT/EP2015/075606
(87) Internationale Veröffentlichungsnummer: WO 2016/091484

(56) Entgegenhaltungen:
- EP-A1- 2 698 569
- WO-A1-03/095879
- WO-A1-2008/138496
- CA-A1- 2 678 983

## Beschreibung

Die vorliegende Erfindung betrifft ein Durchflusssperrventil zum Öffnen und Schließen einer Fluidverbindung zwischen zwei Räumen, insbesondere für Gleitringdichtungen in der Papierindustrie.

Derartige Durchflusssperrventile werden beispielsweise bei Sperrfluidkreisläufen für Gleitringdichtungen verwendet und sind beispielsweise aus der WO 2008/138496 A1 bekannt. Dieses Durchflusssperrventil hat sich grundsätzlich bewährt und wird insbesondere in Verbindung mit einem Kühlkreislauf für Gleitringdichtungen verwendet. Hierbei kann das Durchflusssperrventil temperaturgesteuert Öffnen und Schließen. Es hat sich nun jedoch herausgestellt, dass insbesondere bei Verwendung des bekannten Durchflusssperrventils bei Anwendungen in der Papier- und Faserstoffindustrie in extremen Fällen Probleme auftreten können derart, dass das Feststoffe bzw. Pulpe enthaltende Fluid die Funktionsweise des Durchflusssperrventils beeinträchtigen kann. Bei dem bekannten Durchflusssperrventil verläuft eine Fluiddurchlasspassage durch ein Federelement, welches zur Rückstellung des Ventils verwendet wird. Hierbei können die in der Papierindustrie enthaltenden Feststoffe im Fluid, welches zur Kühlung der Gleitringdichtung verwendet wird, die Funktionsweise des Federelements beeinträchtigen. Weiterhin ist aus der WO 03/095879 A1 ein Durchflusssperrventil mit einem thermosensitiven Steuerelement bekannt, welches in einem Winkel zur Durchflussrichtung angeordnet ist.

Es ist daher Aufgabe der vorliegenden Erfindung, ein Durchflusssperrventil bereitzustellen, welches bei einfachem Aufbau und einfacher, kostengünstiger Herstellbarkeit auch bei Anteilen von Feststoffen, Zellstoffen, Pulpe oder dgl., im Fluid eine sichere Funktionsweise aufweist und welches auch ein manuelles Öffnen, z.B. zum Entlüften oder Spülen, ermöglicht.

Die Lösung dieser Aufgabe erfolgt mit einem Durchflusssperrventil mit den Merkmalen des Anspruchs 1. Die Unteransprüche zeigen bevorzugte Weiterbildungen der Erfindung.

Das erfindungsgemäße Durchflusssperrventil mit den Merkmalen des Anspruchs 1 weist den Vorteil auf, dass ein Vorspannelement, welches ein Schließelement in einer Schließposition hält, in einem separaten Vorspannraum angeordnet ist, welcher nicht Teil einer Fluiddurchlasspassage durch das Ventil ist. Dadurch kann verhindert werden, dass Feststoffe, welche in dem durch das Durchflusssperrventil zu steuernden Fluid vorhanden sind, eine Funktion des Vorspannelements beeinträchtigen. Ein weiterer Vorteil des erfindungsgemäßen Durchflusssperrventils liegt darin, dass lediglich nur noch genau ein Ventilsitz vorgesehen ist, um die Fluiddurchlasspassage freizugeben und zu verschließen. Dadurch kann insbesondere der Aufbau des Durchflusssperrventils deutlich vereinfacht werden. Dies wird erfindungsgemäß dadurch erreicht, dass das Durchflusssperrventil genau einen Ventilsitz in der Fluiddurchlasspassage aufweist, welcher zwischen einem Gehäuse und dem Schließelement vorgesehen ist. Das im Vorspannraum angeordnete Vorspannelement ist eingerichtet, mittels einer Vorspannkraft das Schließelement in der geschlossenen Position zu halten. Ein thermosensitives Steuerelement ist mit dem Schließelement derart verbunden, dass bei einer Temperaturänderung eine Axialbewegung des thermosensitiven Steuerelements erfolgt, um unter Einwirkung der Temperaturänderung des Fluids eine Axialkraft auf das Schließelement in Richtung der geöffneten Stellung auszuüben, so dass bei Überschreiten einer vorbestimmten Fluidtemperatur eine Bewegung des Schließelements gegen die Vorspannkraft des Vorspannelements in die geöffnete Stellung erfolgt.

Vorzugsweise ist der separate Vorspannraum zwischen dem Schließelement und dem Gehäuse vorgesehen. Dadurch kann ein besonders kompakter Aufbau des Durchflusssperrventils ermöglicht werden. Das Gehäuse ist besonders bevorzugt mehrteilig vorgesehen, um insbesondere die Herstellkosten gering zu halten.

Um eine Bewegung des Schließelements mit möglichst geringem Kraftaufwand bereitzustellen, ist das Schließelement druckentlastet. Die Druckentlastung erfolgt erfindungsgemäss dadurch, dass eine Druckentlastungsöffnung im Schließelement selbst vorgesehen ist. Die Druckentlastungsöffnung verbindet dabei den Vorspannraum mit einem ersten Raum vor dem Schließelement.

Weiterhin weist bevorzugt die Fluiddurchlasspassage einen ersten Passagenbereich auf, welcher durch das Schließelement verläuft. Auch hierdurch kann ein besonders kompakter Aufbau des Durchflusssperrventils realisiert werden.

Weiter bevorzugt ist eine Abzweigleitung vorgesehen, welche von der Druckentlastungsöffnung abzweigt derart, dass bei geöffnetem Durchflusssperrventil Fluid aus der Druckentlastungsöffnung in die Abzweigleitung strömen kann und von dort in die Fluiddurchlasspassage. Dadurch kann eine Durchflussmenge durch das Ventil vergrößert werden.

Weiter bevorzugt weist das thermosensitive Steuerelement einen Bypass auf, über welchen Fluid auch bei geschlossenem Durchflusssperrventil zum Schließelement gelangen kann. Dabei sperrt das Schließelement trotzdem die Fluiddurchlasspassage ab. Fluid kann aber über die Druckentlastungsöffnung im Schließelement selbst in den Vorspannraum gelangen.

Besonders bevorzugt ist das thermosensitive Steuerelement derart vorgesehen, dass das Schließelement direkt vom Steuerelement berührt und betätigt wird. Dies ermöglicht einen weiteren kompakten Aufbau, insbesondere hinsichtlich einer Axiallänge des Durchflusssperrventils.

Das Durchflusssperrventil umfasst ferner bevorzugt ein am Gehäuse vorgesehenes Gewinde zur Fixierung des Durchflusssperrventils an einem anderen Bauteil. Das Gewinde ist dabei an einer Position des Durchflusssperrventils angeordnet, in welcher keine oder nur eine teilweise radiale Überdeckung zwischen dem thermosensitiven Steuerelement und dem Gewinde vorhanden ist. Dadurch können insbesondere Beschädigungen des thermosensitiven Steuerelements bei der Montage des Ventils vermieden werden.

Um den Ventilsitz definiert zu schließen und eine Überbelastung des Ventilsitzes, insbesondere falls elastische Bauteile am Ventilsitz verwendet werden, zu verhindern, ist vorzugweise ein Anschlag vorgesehen, welcher einen Weg des Schließelements begrenzt.

Weiter bevorzugt umfasst das thermosensitive Steuerelement einen Steuerstift, welcher in einer im Schließelement vorgesehenen Ausnehmung angeordnet ist. Das Schließelement ist dabei über den Steuerstift betätigbar. Der Steuerstift ist bevorzugt das einzige bewegliche Bauteil des thermosensitiven Steuerelements und bevorzugt ein Zylinderstift. Hierdurch kann ein schnelles Ansprechen des Durchflusssperrventils bei einer Temperaturänderung des Fluids erreicht werden.

Besonders bevorzugt ist im geschlossenen Zustand des Durchflusssperrventils dabei ein vorbestimmter Abstand zwischen dem thermosensitiven Steuerelement und dem Schließelement vorgesehen. Hierdurch kann bei einer Temperaturänderung eine gewisse Zeitverzögerung eines Öffnens des Schließelements erreicht werden. Dies ist beispielsweise dann gewünscht, wenn das Steuerelement das Schließelement nur bei einer relativ großen Temperaturänderung betätigen soll.

Vorzugsweise ist am Ventilsitz ein erstes Dichtelement, insbesondere ein elastomeres Dichtelement, vorgesehen.

Besonders bevorzugt ist am Schließelement ein zweites Dichtelement, z.B. ein Elastomerring oder dgl., vorgesehen, um eine Abdichtung des Vorspannraums sicherzustellen. Das zweite Dichtelement ist dabei nicht am Ventilsitz zwischen dem Schließelement und dem Gehäuse vorgesehen, sondern an einer anderen Stelle des Schließelements. Somit kann eine sichere Abdichtung des Vorspannraums, in welchem das Vorspannelement angeordnet ist, erreicht werden, ohne dass weitere Bauteile notwendig sind.

Erfindungsgemäss ist im Gehäuse ein Spiralschlitz vorgesehen, durch welchen Stifte geführt sind, um eine manuelle Bewegung des Schließelementes in Axialrichtung zu ermöglichen. Besonders bevorzugt ist der Spiralschlitz am Außenumfang des Gehäuses als eine durchgehende Öffnung vorgesehen. Hierbei greifen mehrere Stifte durch die durchgehende Öffnung am Schliesselement an. Die Stifte sind an einer das Gehäuse umgebenden Hülse fixiert. Durch Drehen der Hülse kann somit das Schliesselement manuell in Axialrichtung bewegt werden und ein Öffnen des Durchflusssperrventils, z.B. zum Entlüften oder Spülen, erreicht werden.

Die vorliegende Erfindung betrifft ferner eine Gleitringdichtungsanordnung, umfassend ein erfindungsgemäßes Durchflusssperrventil. Die Gleitringdichtungsanordnung umfasst dabei besonders bevorzugt eine Sperrfluidanordnung, wobei das erfindungsgemäße Durchflusssperrventil Teil der Sperrfluidanordnung ist. Vorzugsweise ist das dabei verwendete Sperrfluid das abzudichtende Medium, insbesondere Wasser mit Feststoffen, Pulpe oder dgl., insbesondere aus der Papierindustrie. Insbesondere kann das erfindungsgemässe Durchflusssperrventil in Kühlkreisläufen einer Gleitringdichtung verwendet werden.

Nachfolgend wird ein bevorzugtes Ausführungsbeispiel der Erfindung unter Bezugnahme auf die begleitende Zeichnung im Detail beschrieben. In der Zeichnung sind:
- Fig. 1: eine schematische Schnittansicht eines Durchflusssperrventils in einem geschlossenen Zustand, und
- Fig. 2: eine schematische Schnittansicht des Durchflusssperrventils von Fig. 1 in einem geöffneten Zustand.

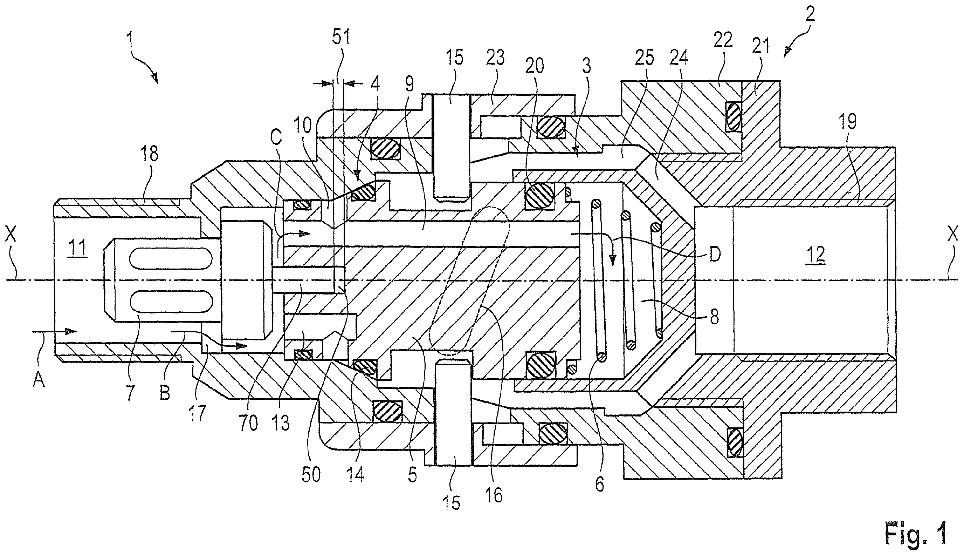

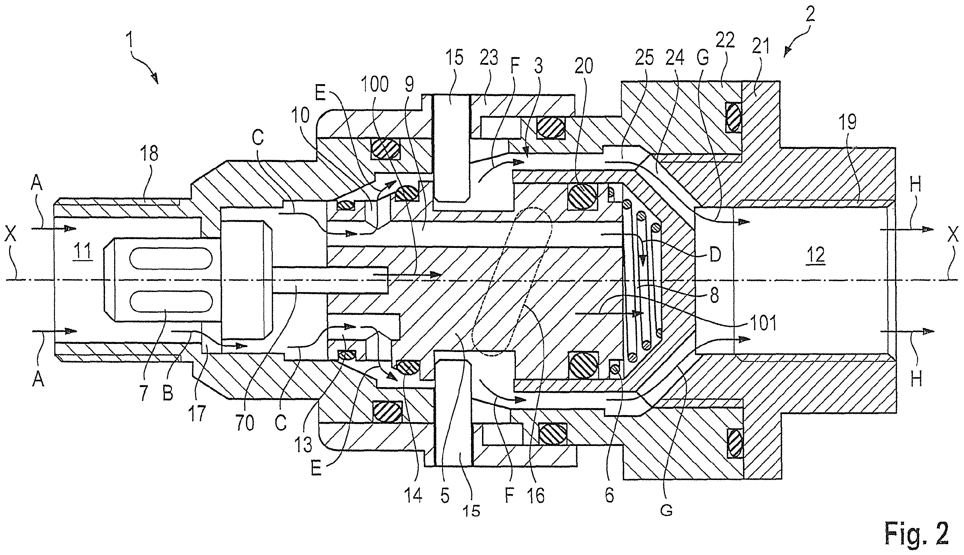

Nachfolgend wird unter Bezugnahme auf die Fig. 1 und 2 ein Durchflusssperrventil gemäß einem bevorzugten Ausführungsbeispiel der Erfindung der Erfindung im Detail beschrieben.

Wie aus Fig. 1 ersichtlich ist, umfasst das Durchflusssperrventil 1 ein Gehäuse 2, welches mehrteilig ausgebildet ist. Das Gehäuse 2 umfasst einen ersten Teil 21, einen zweiten Teil 22 und einen dritten Teil 23. Am ersten Teil 21 ist ein Innengewinde 19 ausgebildet und am zweiten Teil 22 ist ein Außengewinde 18 vorgesehen. Die beiden Gewinde 18, 19 dienen zur Befestigung des Durchflusssperrventils 1, beispielsweise in einem Sperrfluidkreislauf einer Gleitringdichtung.

Das Durchflusssperrventil 1 umfasst ferner eine Fluiddurchlasspassage 3, welche von einem ersten Raum 11 zu einem zweiten Raum 12 durch das Gehäuse 2 verläuft.

Die Fluiddurchlasspassage 3 ist mittels eines Schließelements 5 an genau nur einem Ventilsitz 4 verschließbar und freigebbar. Der Ventilsitz 4 ist dabei zwischen dem Schließelement 5 und dem Gehäuse 2, genauer dem zweiten Teil 22 des Gehäuses, gebildet.

Das Schließelement 5 umfasst ein erstes Dichtelement 14, welches in diesem Ausführungsbeispiel als O-Ring vorgesehen ist, und welches am Ventilsitz 4 im geschlossenen Zustand abdichtet. Hierzu ist am Ventilsitz 4 am Gehäuse 2 ein sich konisch verjüngender Bereich vorgesehen.

Das Durchflusssperrventil 1 umfasst ferner ein Vorspannelement 6, welches das Schließelement 5 in Richtung zum ersten Raum 11 in den geschlossenen Zustand vorspannt. Das Vorspannelement 6 ist dabei in einem Vorspannraum 8 angeordnet, welcher zwischen dem Schließelement 5 und dem Gehäuse 2 vorgesehen ist. Eine zweite Dichtung 20 dichtet dabei zwischen dem Schließelement 5 und dem Gehäuse 2 ab. Somit wird der Vorspannraum durch das Schliesselement 5 und das Gehäuse 2 definiert.

Im Schließelement 5 ist ferner eine Druckentlastungsöffnung 9 vorgesehen, welche in Axialrichtung X-X des Durchflusssperrventils 1 vollständig durch das Schließelement 5 verläuft. Die Druckentlastungsöffnung 9 verbindet dabei den ersten Raum 11 mit dem Vorspannraum 8.

Ferner ist ein thermosensitives Steuerelement 7 vorgesehen, welches mit dem Schließelement 5 in Kontakt bringbar ist und das Schließelement gegen die Vorspannkraft des Vorspannelements 6 in Axialrichtung X-X bewegen kann. Das thermosensitive Steuerelement 7 ist ein Betätigungselement, welches dem Fluid im ersten Raum 11 ausgesetzt ist und das ausgebildet ist, unter Einwirkung einer Temperaturänderung des Fluids eine Axialkraft auf das Schließelement 5 in Richtung auf den Vorspannraum 8 auszuüben. Dadurch kommt das Schließelement 5 von der in Fig. 1 gezeigten geschlossenen Position in die in Fig. 2 gezeigte geöffnete Position. Durch das Vorhandensein der Druckentlastungsöffnung 9 ist dabei das Schließelement 5 druckentlastet, so dass eine Bewegung mit nur geringem Kraftaufwand möglich ist.

Am thermosensitiven Steuerelement 7 ist ferner ein Bypass 17 vorgesehen, so dass auch bei geschlossenem Durchflusssperrventil 1 (Fig. 1) Fluid, wie durch die Pfeile A, B, C und D angedeutet, vom ersten Raum 11 über den Bypass 17 und die Druckentlastungsöffnung 9 in den Vorspannraum 8 gelangen kann.

Im Gehäuse 2 ist ferner eine durchgehende Öffnung vorgesehen, welche als Spiralschlitz 16 ausgebildet ist und durch welche in diesem Ausführungsbeispiel mehrere Stifte 15 eingreifen. Die Stifte 15 sind mit einer Hülse 23 fest verbunden und greifen am Schliesselement 5 an, um das Schliesselement 5 manuell in Axialrichtung X-X zu bewegen. Hierdurch kann eine manuelle Entlüftung und Spülung vorgesehen werden.

Um eine sichere Betätigung des Schließelements 5 mittels des thermosensitiven Steuerelements 7 sicherzustellen, weist das Steuerelement 7 einen Zylinderstift 70 auf, welcher in einer Bohrung 50 im Schließelement 5 angeordnet ist. Dabei ist im geschlossenen Zustand des Durchflusssperrventils ein Abstand 51 zwischen dem Zylinderstift 70 und dem Boden der Bohrung 50 vorhanden, so dass eine zeitverzögerte Betätigung des Schließelements 5 realisiert ist.

Die Funktion des erfindungsgemäßen Durchflusssperrventils ist dabei wie folgt: Wenn eine Temperatur im ersten Raum 11 ansteigt, erwärmt sich das thermosensitive Steuerelement 7. Das Steuerelement 7 umfasst den Zylinderstift 70, welcher sich aufgrund der Temperaturerhöhung, wie in Fig. 2 durch den Pfeil 100 gezeigt, in Richtung zum Schließelement 5 bewegt. Nachdem der Zylinderstift 70 den Abstand 51 zurückgelegt hat, kommt der Zylinderstift 70 mit dem Boden der Bohrung 50 im Schließelement 5 in Kontakt. Dadurch wird das Schließelement 5 in Richtung des Pfeils 101 gegen die Vorspannkraft des Vorspannelements 6 bewegt. Dadurch wird das Vorspannelement 6 zusammengedrückt und das Volumen des Vorspannraums 8 reduziert. Dieser Zustand ist in Fig. 2 dargestellt.

Im Schließelement 5 ist ferner noch ein Passagenbereich 13 vorgesehen, über welchen im geöffneten Zustand des Durchflusssperrventils 1 das Fluid vom ersten Raum 11 in den zweiten Raum 12 strömen kann. Dies ist in Fig. 2 durch die Pfeile C, E, F und G angedeutet. Die Fluiddurchlasspassage 3 verläuft somit vom ersten Raum 11 (Pfeil A) vorbei am Steuerelement 7 (Pfeil B) in den Passagenbereich 13 und parallel hierzu über die Druckentlastungsöffnung 9 und mehrere Abzweigleitungen 10 (Pfeil E) zum Außenumfang des Schließelements 5 (Pfeil F) in einen Ringraum 25. Im Gehäuse 2, genauer im ersten Teil 21 des Gehäuses 2, sind ferner noch Zulaufbohrungen 24 vorgesehen, über welche das Fluid dann vom Ringraum 25 (Pfeil G) zum zweiten Raum 12 strömt. Vom zweiten Raum 12 strömt das Fluid dann, wie durch die Pfeile H angedeutet, weiter.

Das Durchflusssperrventil 1 ist dabei bevorzugt in einem Sperrfluidkreislauf einer Gleitringdichtung angeordnet. Dadurch kann bei zu hohen Temperaturen ein Kühlkreislauf über den Sperrfluidkreislauf realisiert werden, so dass eine ausreichende Kühlung der Gleitringdichtung möglich ist. Weiterhin kann das erfindungsgemäße Durchflusssperrventil 1 auch für ein manuelles Entlüften der Gleitringdichtung verwendet werden.

Da das Vorspannelement 6 in einem im Wesentlichen abgeschlossenen Vorspannraum 8 angeordnet ist, verläuft die Fluiddurchlasspassage 3 nicht mehr durch den Vorspannraum 8 selbst, sondern an diesem vorbei. Dadurch wird verhindert, dass Feststoffe, welche im Fluid, beispielsweise bei Anwendungen in der Papierindustrie, vorhanden sein können, eine Bewegbarkeit des Vorspannelements 6 einschränken. Weiterhin ist erfindungsgemäß nur genau ein einziger Ventilsitz 4 vorgesehen, um die Fluiddurchlasspassage 3 abzusperren und freizugeben. Darüber hinaus kann ein einteiliges Schließelement 5 verwendet werden, so dass auch eine Montage und Herstellung des erfindungsgemäßen Durchflusssperrventils 1 weiter vereinfacht werden kann. Am Ventilsitz 4 können dabei beispielsweise O-Ringe als Abdichtelemente verwendet werden.

Bei geöffnetem Durchflusssperrventil wird weiterhin neben dem Passagenbereich 13 auch ein Teil der Druckentlastungsöffnung 9 in Verbindung mit der Abzweigleitung 10 zum Transport des Fluids verwendet.

Weiterhin ist das thermosensitive Steuerelement 7 derart im Gehäuse 2 angeordnet, dass in Radialrichtung lediglich eine teilweise Überdeckung zwischen dem Gewinde 18 und dem thermosensitiven Steuerelement 7 vorhanden ist. Durch diese Anordnung kann insbesondere sichergestellt werden, dass das empfindliche thermosensitive Steuerelement 7 während der Montage nicht durch ein zu hohes Anzugsdrehmoment oder dgl. beschädigt wird.

### Bezugszeichenliste

- 1: Durchflusssperrventil
- 2: Gehäuse
- 3: Fluiddurchlasspassage,
- 4: Ventilsitz
- 5: Schließelement
- 6: Vorspannelement
- 7: thermosensitives Steuerelement
- 8: Vorspannraum
- 9: Druckentlastungsöffnung
- 10: Zweigleitung
- 11: erster Raum
- 12: zweiter Raum
- 13: Passagenbereich
- 14: erstes Dichtelement
- 15: Stifte
- 16: Spiralschlitz
- 17: Bypass
- 18: Außengewinde
- 19: Innengewinde
- 20: zweites Dichtelement
- 21: erster Teil des Gehäuses 2
- 22: zweiter Teil des Gehäuses 2
- 23: dritter Teil des Gehäuses 2
- 24: Zulaufbohrung
- 25: Ringraum
- 50: Bohrung
- 51: Abstand
- 70: Zylinderstift
- 100: Bewegung des thermosensitiven Steuerelements
- 101: Bewegung des Schließelements
- A-H: Pfeile zur Verdeutlichung der Fluidströmung
- X-X: Axialrichtung

## Patentansprüche

1. Durchflusssperrventil zum Öffnen und Schließen einer Fluidverbindung zwischen einem ersten Raum (11) und einem zweiten Raum (12), umfassend:
- ein Gehäuse (2),
- eine Fluiddurchlasspassage (3),
- ein in der Fluiddurchlasspassage (3) in Axialrichtung (X-X) bewegbar angeordnetes Schließelement (5),
- genau einen Ventilsitz (4), an welchem die Fluiddurchlasspassage(3) freigebbar und verschließbar ist, wobei der Ventilsitz (4) zwischen dem Gehäuse (2) und dem Schließelement (5) vorgesehen ist,
- ein Vorspannelement (6), welches in einem separaten Vorspannraum (8) angeordnet ist, und welches das Schließelement (5) in eine Schließposition am Ventilsitz (4) vorspannt, und
- ein thermosensitives Steuerelement (7), welches im ersten Raum (11) befindlichem Fluid aussetzbar ist und das ausgebildet ist, um unter Einwirkung einer Temperaturänderung des Fluids eine Axialkraft auf das Schließelement (5) in Richtung einer offenen Stellung auszuüben, um das Schließelement (5) bei Überschreiten einer vorbestimmten Fluidtemperatur gegen eine Vorspannkraft des Vorspannelements (6) in eine geöffnete Stellung zu bewegen, und
- eine Druckentlastungsöffnung (9), welche im Schließelement (5) vorgesehen ist, um den Vorspannraum (8) mit dem ersten Raum (11) zu verbinden,
- wobei im Gehäuse (2) ein Spiralschlitz (16) vorgesehen ist, durch welchen Stifte (15) geführt sind, um eine manuelle Bewegung des Schließelementes (5) in Axialrichtung (X-X) zu ermöglichen.

2. Ventil nach Anspruch 1, **dadurch gekennzeichnet, dass** der Vorspannraum (8) zwischen dem Schließelement (5) und dem Gehäuse (2) ausgebildet ist.

3. Ventil nach einem der vorhergehenden Ansprüche, **dadurch gekennzeichnet, dass** die Fluiddurchlasspassage (3) einen Passagenbereich (13) aufweist, welcher durch das Schließelement (5) verläuft.

4. Ventil nach Anspruch 1, **gekennzeichnet durch** eine Abzweigleitung (10), welche von der Druckentlastungsöffnung (9) abzweigt derart, dass bei geöffnetem Durchflusssperrventil Fluid aus der Druckentlastungsöffnung (9) in die Abzweigleitung (10) strömt.

5. Ventil nach einem der vorhergehenden Ansprüche, ferner umfassend einen Bypass (17), welcher am thermosensitiven Steuerelement (7) vorbeiführt, wobei Fluid über den Bypass (17) auch bei geschlossenem Durchflusssperrventil zum Schließelement (5) gelangt.

6. Ventil nach einem der vorhergehenden Ansprüche, **dadurch gekennzeichnet, dass** das thermosensitive Steuerelement (7) das Schließelement direkt berührt und betätigt.

7. Ventil nach einem der vorhergehenden Ansprüche, ferner umfassend ein am Gehäuse vorgesehenes Gewinde (18) zur Fixierung des Durchflusssperrventils, wobei keine radiale Überdeckung oder nur eine teilweise radiale Überdeckung zwischen dem Gewinde (18) und dem thermosensitiven Steuerelement (7) vorhanden ist.

8. Ventil nach einem der vorhergehenden Ansprüche, **dadurch gekennzeichnet, dass** das thermosensitive Steuerelement (7) einen Steuerstift (70) umfasst, welcher in einer im Schließelement (5) vorgesehenen Ausnehmung (50) angeordnet ist, wobei das Schließelement (5) über den Steuerstift (70) betätigbar ist.

9. Ventil nach Anspruch 8, **dadurch gekennzeichnet, dass** zwischen dem thermosensitiven Steuerelement (7) und dem Schließelement (5) im geschlossenen Zustand des Durchflusssperrventils ein vorbestimmter Abstand (51) in Axialrichtung (X-X) vorgesehen ist.

10. Ventil nach einem der vorhergehenden Ansprüche, **dadurch gekennzeichnet, dass** am Schließelement (5) ein erstes Dichtelement (14) vorgesehen ist, um eine Abdichtung am Ventilsitz (4) bereitzustellen.

11. Ventil nach einem der vorhergehenden Ansprüche, **dadurch gekennzeichnet, dass** zwischen dem Schließelement (5) und dem Gehäuse (2) ein zweites Dichtelement (20) vorgesehen ist, um eine Abdichtung des Vorspannraums (8) bereitzustellen.

12. Gleitringdichtungsanordnung, umfassend ein Ventil nach einem der vorhergehenden Ansprüche.

## Claims

1. A flow stop valve for opening and closing a fluid communication between a first compartment (11) and a second compartment (12) comprising:
- a housing (2),
- a fluid passage way (3),
- a closing element (5) movably arranged in the fluid passage way (3) in the axial direction (X-X),
- exactly one valve seat (4) on which the fluid passage way (3) is releasable and closeable,
- the valve seat (4) being provided between the housing (2) and the closing element (5),
- a biasing element (6) which is arranged in a separate biasing compartment, (8) and biasing the closing element (5) into a closing position on the valve seat (4), and
- a thermosensitive control element (7) exposable to fluid located in the first compartment (11), and designed for applying an axial force to the closing element (5) in the direction of an open position under the effect of a temperature change in the fluid, to displace the closing element (5) into an open position against a biasing force of the biasing element (6) when exceeding a predetermined fluid temperature, and
- a pressure relief vent (9) provided in the closing element (5) for connecting the biasing compartment (8) to the first compartment (11),
- wherein a helical slot (16) is provided in the housing (2), through which pins (15) are inserted to allow for manually displacing the closing element (5) in the axial direction (X-X).

2. The valve according to claim 1, **characterized in that** the biasing compartment (8) is formed between the closing element (5) and the housing (2).

3. The valve according to one of the preceding claims, **characterized in that** the fluid passageway (3) comprises a passage area (13) which passes through the closing element (5).

4. the valve according to claim 1, **characterized by** a branch pipe (10) which branches off from the pressure relief vent (9) such that fluid passes through pressure relief vent (9) into the branch line (10), when the flow stop valve is open.

5. The valve according to one of the preceding claims, further comprising a bypass (17) which circumvents the thermosensitive control element (7), wherein fluid is entering the closing element (5) via the bypass (17) even when the flow stop valve is closed.

6. The valve according to one of the preceding claims, **characterized in that** the thermosensitive control element (7) directly contacts and operates the closing element.

7. The valve according to one of the preceding claims, further comprising threads (18) provided on the housing for fixing the flow stop valve, wherein no radial overlap or only partial radial overlap exists between the threads (18) and the thermosensitive control element (7).

8. The valve according to one of the preceding claims, **characterized in that** the thermosensitive control element (7) comprises a control pin (70) which is arranged in a recess (50) provided in the closing element (5), the closing element (5) being operable via the control pin (70).

9. The valve according to claim 8, **characterized in that** in the closed state of the flow stop valve, a predetermined distance (51) in the axial direction (X-X) is provided between the thermosensitive control element (7) and the closing element (5).

10. The valve according to one of the preceding claims, **characterized in that** a first sealing element (14) is provided on the closing element (5) to provide a seal on the valve seat (4).

11. The valve according to one of the preceding claims, **characterized in that** a second sealing element (20) is provided between the closing element (5) and the housing (2) to provide a seal to the biasing compartment (8).

12. A mechanical seal assembly comprising a valve according to one of the preceding claims.

## Revendications

1. Soupape d'arrêt d'écoulement pour l'ouverture et la fermeture d'une liaison fluidique entre un premier espace (11) et un second espace (12), comprenant :
- un boîtier (2),
- un passage de circulation de fluide (3),
- un élément de fermeture (5) agencé de manière à pouvoir se déplacer dans le passage de circulation de fluide (3) dans le sens axial (X-X),
- précisément un siège de soupape (4), au niveau duquel le passage de circulation de fluide (3) peut être libéré et refermé,
dans laquelle le siège de soupape (4) est prévu entre le boîtier (2) et l'élément de fermeture (5),
- un élément de précontrainte (6), lequel est agencé dans un espace de précontrainte (8) séparé, et lequel précontraint l'élément de fermeture (5) dans une position de fermeture au niveau du siège de soupape (4), et
- un élément de commande thermosensible (7), lequel peut être soumis au fluide se trouvant dans le premier espace (11) et qui est réalisé afin d'exercer une force axiale sur l'élément de fermeture (5) en direction d'une position ouverte sous l'effet d'une modification de température du fluide afin de déplacer l'élément de fermeture (5) lors du dépassement d'une température de fluide prédéterminée contre une force de précontrainte de l'élément de précontrainte (6) dans une position ouverte, et
- une ouverture de détente (9), laquelle est prévue dans l'élément de fermeture (5) afin de relier l'espace de précontrainte (8) au premier espace (11),
- dans laquelle une fente spiralée (16) est prévue dans le boîtier (2) par laquelle des tiges (15) sont guidées afin de permettre un mouvement manuel de l'élément de fermeture (5) dans le sens axial (X-X).

2. Soupape selon la revendication 1, **caractérisée en ce que** l'espace de précontrainte (8) est réalisé entre l'élément de fermeture (5) et le boîtier (2).

3. Soupape selon l'une quelconque des revendications précédentes, **caractérisée en ce que** le passage de circulation de fluide (3) présente une zone de passage (13), laquelle s'étend à travers l'élément de fermeture (5).

4. Soupape selon la revendication 1, **caractérisée par** une conduite de contournement (10), laquelle prévoit un contournement depuis l'ouverture de détente (9) de telle manière que lorsque la soupape d'arrêt d'écoulement est ouverte, du fluide s'écoule depuis l'ouverture de détente (9) dans la conduite de déviation (10).

5. Soupape selon l'une quelconque des revendications précédentes, comprenant de plus une dérivation (17), laquelle passe près de l'un élément de commande thermosensible (7), dans laquelle du fluide parvient aussi par la dérivation (17) à l'élément de fermeture (5) lorsque la soupape d'arrêt d'écoulement est fermée.

6. Soupape selon l'une quelconque des revendications précédentes, **caractérisée en ce que** l'élément de commande thermosensible (7) touche directement l'élément de fermeture et l'actionne.

7. Soupape selon l'une quelconque des revendications précédentes, comprenant de plus un filetage (18) prévu sur le boîtier pour la fixation de la soupape d'arrêt d'écoulement, dans laquelle aucun recouvrement radial ou seul un recouvrement partiellement radial est présent entre le filetage (18) et l'élément de commande thermosensible (7).

8. Soupape selon l'une quelconque des revendications précédentes, **caractérisée en ce que** l'élément de commande thermosensible (7) comprend une tige de commande (70), laquelle est agencée dans un évidement (50) prévu dans l'élément de fermeture (5), dans laquelle l'élément de fermeture (5) peut être actionné par le biais de la tige de commande (70).

9. Soupape selon la revendication 8, **caractérisée en ce qu'**une distance prédéterminée (51) est prévue dans le sens axial (X-X) entre l'élément de commande thermosensible (7) et l'élément de fermeture (5) dans l'état fermé de la soupape d'arrêt d'écoulement.

10. Soupape selon l'une quelconque des revendications précédentes, **caractérisée en ce qu'**un premier élément étanche (14) est prévu au niveau de l'élément de fermeture (5) afin de fournir une étanchéité au niveau du siège de soupape (4).

11. Soupape selon l'une quelconque des revendications précédentes, **caractérisée en ce qu'**un second élément étanche (20) est prévu entre l'élément de fermeture (5) et le boîtier (2) afin de fournir une étanchéité de l'espace de précontrainte (8).

12. Agencement d'étanchéité à bague glissante comprenant une soupape selon l'une quelconque des revendications précédentes.
